# EUROPÄISCHE PATENTSCHRIFT

(11) **EP 1 412 644 B1**
(45) Veröffentlichungstag und Bekanntmachung des Hinweises auf die Patenterteilung: **17.01.2007**
(21) Anmeldenummer: 02760240.8
(22) Anmeldetag: 12.07.2002
(51) Int. Cl.: F16B 13/12, F16B 13/08, F16B 13/02

(54) **SPREIZDÜBEL**
STRADDLING DOWEL
CHEVILLE A EXPANSION

(30) Priorität: 04.08.2001 DE 10134734
(43) Veröffentlichungstag der Anmeldung: 28.04.2004
(73) Patentinhaber: fischerwerke Artur Fischer GmbH & Co. KG, 72178 Waldachtal (DE)
(72) Erfinder: DALY, Aaron, 72178 Waldachtal (DE)
(86) Internationale Anmeldenummer: PCT/EP2002/007771
(87) Internationale Veröffentlichungsnummer: WO 2003/014583

(56) Entgegenhaltungen:
- EP-A- 1 026 413
- DE-A- 3 146 518
- DE-A- 3 609 562
- US-A- 5 536 122

## Beschreibung

Die Erfindung betrifft einen Spreizdübel mit den Merkmalen des Oberbegriffs des Anspruchs 1.

Derartige Spreizdübel sind an sich bekannt. Sie weisen eine Dübelhülse auf, in die eine Spreizschraube einschraubbar ist, wobei die Spreizschraube die Dübelhülse beim Einschrauben aufweitet. Üblicherweise weist die Dübelhülse Längsschlitze oder in einem Winkel zur Längsrichtung verlaufende Schlitze auf, die die Dübelhülse in Spreizzungen unterteilt, die durch Einschrauben der Spreizschraube auseinandergedrückt bzw. aufgespreizt werden, der Spreizdübel bzw. die Dübelhülse werden aufgeweitet bzw. aufgespreizt. Eine weitere Möglichkeit ist, die Dübelhülse aus einem elastisch und/oder plastisch aufweitbaren Material, insbesondere aus einem Kunststoff, herzustellen. Durch das Aufweiten bzw. Aufspreizen werden die Spreizdübel in einem Bohrloch, beispielsweise in einem Mauerwerk verankert.

Die bekannten Spreizdübel haben den Nachteil, dass sie sich bei einer Bohrlocherweiterung beispielsweise durch Rissbildung im Mauerwerk lockern, ihre Verankerungs- oder Ausziehkraft nimmt ab.

Um diesem Problem zu begegnen, wird in der Druckschrift EP 1 026 413 A2 vorgeschlagen, dass die Spreizschraube ein sägezahnförmiges Gewinde aufweist, dessen in Einschraubrichtung hintere Flanke einen flachen Winkel zu einer Achsrichtung der Spreizschraube aufweist. Beim Setzen des Dübels wird zunächst die Dübelhülse in das Bohrloch eingebracht und dann durch Eindrehen der Spreizschraube radial verspreizt. Entsprechend der Länge der Dübelhülse sind hierzu etliche Schraubenumdrehungen notwendig. Hierdurch ist der Montageaufwand wie bei den anderen genannten Spreizdübeln relativ hoch.

Sägezahngewinde sind darüber hinaus auch bei Schwerlastdübeln beispielsweise aus den Druckschriften US 5,536,122 sowie DE 3 146 518 A1 bekannt. Allerdings handelt es sich hierbei nicht um eine Spreizschraube mit Schraubenkopf, sondern um eine Ankerstange mit einem zusätzlichen, beispielsweise metrischen Gewinde, wobei die Ankerstange in einer Spreizhülse mit komplementärem Sägezahninnengewinde angeordnet ist. Die Verspreizung des Ankers erfolgt nach dem Einschieben der Ankerstangen und der Spreizhülse in das Bohrloch durch Anziehen einer Mutter auf dem zweiten, beispielsweise metrischen Gewinde. Die Mutter stützt sich über eine Unterlagscheibe auf dem zu befestigenden Gegenstand ab und zieht hierdurch die Ankerstange ein Stück aus dem Bohrloch heraus. Auch hier sind zum Verankern jedoch etliche Umdrehungen an der Mutter zum Verspreizen erforderlich.

Der Erfindung liegt daher die Aufgabe zugrunde, einen Spreizdübel zu schaffen, der besonders schnell verankerbar ist.

Diese Aufgabe wird erfindungsgemäß durch die Merkmale des Anspruchs 1 gelöst. Der Spreizdübel weist eine Spreizschraube mit Schraubenkopf auf. Die Spreizschraube weist ein Schraubengewinde auf, dessen in Einschraubrichtung hintere Flanke einen flachen Winkel von etwa 45° oder weniger, vorzugsweise etwa 9°, zu einer Achsrichtung der Spreizschraube aufweist. Die Dübelhülse weist ein zur Spreizschraube komplementäres Innengewinde auf. Hierdurch kann die Spreizschraube bereits vor dem Einbringen des Spreizdübels in das Bohrloch in die Dübelhülse eingebracht werden.

Hierdurch kann der erfindungsgemäße Spreizdübel ohne Drehbewegung in ein Bohrloch eingebracht, beispielsweise mittels eines Hammers oder eines elektrischen Schlagwerkzeugs eingetrieben werden. Ist der Spreizdübel vollständig in das Bohrloch eingetrieben, kann, um eine Vorspannung und ein Aufspreizen des Spreizdübels zu erreichen, die Spreizschraube angezogen werden, wozu eine Drehung um den Bruchteil einer Umdrehung ausreicht. Das Anziehen der Spreizschraube ist allerdings nicht erforderlich, da der Spreizdübel durch eine axiale Belastung in Ausziehrichtung aufgespreizt, d. h. bei Belastung im Bohrloch verankert wird. Damit ist der Spreizdübel besonders schnell verankerbar.

Weitet sich ein Bohrloch, in welchem der erfindungsgemäße Spreizdübel verankert ist, auf, so wird - bei einer axialen Belastung der Spreizschraube in Ausziehrichtung - die Spreizschraube ein kurzes Stück in axialer Richtung aus der Dübelhülse herausgezogen. Dabei spreizt die in einem flachen Winkel von ca. 45° oder weniger zur Achsrichtung stehende, in Einschraubrichtung hintere Flanke des Schraubengewindes der Spreizschraube die Dübelhülse weiter auf. Der Spreizdübel wird nachgespreizt und bleibt mit näherungsweise unveränderter Verankerungskraft im Bohrloch verankert.

Des Weiteren weist das Schraubengewinde der Spreizschraube des erfindungsgemäßen Spreizdübels eine große Gewindesteigung auf, die Gewindesteigung entspricht in etwa einem Kerndurchmesser des Schraubengewindes oder ist größer. Auf diese Weise ergibt sich eine in axialer Richtung lange, in Einschraubrichtung hintere Flanke des Schraubengewindes. Da die maximale Aufspreizung der Dübelhülse bei einer Verschiebung der Spreizschraube gegenüber der Dübelhülse in Ausziehrichtung um einen Gewindegang, also die Steigung erfolgt, ermöglicht die Erfindung einen langen Ausziehweg und damit verbunden eine große Nachspreizung.

Der erfindungsgemäße Spreizdübel hat somit die Vorteile des Nachspreizverhaltens, so dass er zugzonentauglich ist, einer großen Verschiebbarkeit der Spreizschraube gegenüber der Dübelhülse in Ausziehrichtung bis zum Erreichen der maximalen Aufspreizung der Dübelhülse und einer großen, maximalen Aufspreizung der Dübelhülse, wodurch auch bei verhältnismäßig großen Bohrlocherweiterungen ein fester Sitz des Spreizdübels im Bohrloch gewährleistet ist. Weiterer Vorteil des erfindungsgemäßen Spreizdübels ist, dass er sich sowohl für Vollbaustoffe wie beispielsweise Beton als auch für Hohlbaustoffe wie beispielsweise Lochziegel eignet. Die Eignung für Hohlbaustoffe wird dadurch erreicht, dass die Spreizschraube die Dübelhülse über die gesamte Länge des Schraubengewindes gleichmäßig aufspreizt, wodurch eine Aufspreizung der Dübelhülse auch im Bereich eines oder mehrerer Stege eines Lochziegels und damit eine Verankerung des Spreizdübels im Lochziegel erreicht wird.

Eine Ausgestaltung der Erfindung sieht eine Ausdrehsicherungseinrichtung vor, die einem Ausdrehen der Spreizschraube aus der Dübelhülse entgegenwirkt. Durch die große Gewindesteigung besteht die Möglichkeit, dass das Schraubengewinde selbsthemmungsfrei ist. Selbsthemmungsfrei bedeutet, dass eine axiale Beanspruchung die Spreizschraube in Drehung versetzt und aus der Dübelhülse ausdreht. Die Ausdrehsicherungseinrichtung verhindert das Ausdrehen der Spreizschraube aus der Dübelhülse durch eine Axialbeanspruchung der Spreizschraube. Dadurch wird erriecht, dass eine axiale Beanspruchung der Spreizschraube in Ausziehrichtung eine Aufspreizung und Nachspreizung des Spreizdübels bewirkt. Die Ausdrehsicherungseinrichtung soll vorzugsweise ein gewolltes Ausdrehen der Spreizschraube aus der Dübelhülse durch drehenden Antrieb der Spreizschraube zulassen. Das Ausdrehen der Spreizschraube aus der Dübelhülse sollte vorzugsweise zumindest bei außerhalb eines Bohrlochs befindlichem und/oder nicht aufgespreiztem Spreizdübel möglich sein. Da die Selbsthemmung bzw. Selbsthemmungsfreiheit außer von der Geometrie des Schraubengewindes von weiteren, reibungsbeeinflussenden Faktoren wie der Materialpaarung, Schmierzustand, Verunreinigung durch Bohrmehl oder dgl., u. u. Temperatur und Flächenpressung abhängt, ist die Selbsthemmung bzw. Selbsthemmungsfreiheit nicht zwingend vorgegeben, sondern kann sich bei ein und demselben Spreizdübel in Abhängigkeit von den jeweiligen Einsatzbedingungen einstellen oder auch nicht. Die erfindungsgemäße Ausdrehsicherungseinrichtung verhindert ein ungewünschtes Ausdrehen der Spreizschraube aus der Dübelhülse durch axiale Beaufschlagung der Spreizschraube in Ausziehrichtung wenn Selbsthemmungsfreiheit auftritt.

Eine Ausgestaltung der Erfindung sieht eine Ausdrehsicherungsflanke am Schraubengewinde der Spreizschraube vor, die in etwa in einer Längsrichtung der Spreizschraube und in etwa radial zur Spreizschraube verläuft. Die Ausdrehsicherungsflanke ist in der Ausdrehrichtung der Spreizschraube ausgerichtet. Die Ausdrehsicherungsflanke bewirkt einen sägezahnförmigen Querschnitt des Schraubengewindes, die Ausdrehsicherungsflanke drückt sich beim Aufspreizen in die Dübelhülse ein und wirkt aufgrund ihrer Orientierung einem Ausdrehen der Spreizschraube aus der Dübelhülse entgegen. Bei nicht aufgespreizter Dübelhülse drückt sich die Ausdrehsicherungsflanke nicht oder nur schwach in die Dübelhülse ein, so dass die Spreizschraube aus der Dübelhülse ausgedreht werden kann. Das Eindrehen der Spreizschraube in die Dübelhülse wird von der Ausdrehsicherungsflanke nicht behindert.

Eine Ausgestaltung der Erfindung sieht eine gemeinsame Kante der Ausdrehsicherungsflanke mit einer Flanke, beispielsweise der in Einschraubrichtung hinteren Flanke, des Schraubengewindes vor. Die Ausdrehsicherungsflanke steht bei dieser Ausgestaltung der Erfindung radial nicht über die Flanke des Schraubengewindes vor und behindert dadurch das gewollte Ein- oder Ausdrehen der Spreizschraube in und aus der nicht aufgespreizten Dübelhülse nicht. Beim Aufspreizen drückt sich die Ausdrehsicherungsflanke in die Dübelhülse ein und verhindert dadurch das ungewünschte Ausdrehen der Spreizschraube durch axiale Belastung in Ausziehrichtung.

Eine Ausgestaltung der Erfindung sieht eine Aufrauung an einer Unterseite eines Schraubenkopfes der Spreizschraube als Ausdrehsicherungseinrichtung vor. Mit Unterseite ist eine einem Schraubenschaft und dem Schraubengewinde zugewandte Stirnseite des Schraubenkopfs gemeint. Diese Ausgestaltung der Erfindung kann zusätzlich oder als Alternative zur vorstehend erläuterten Ausdrehsicherungsflanke vorgesehen sein. Die Aufrauung an der Unterseite des Schraubenkopfes erhöht eine Reibung zwischen dem Schraubenkopf und einem an seiner Unterseite anliegenden, mit der Spreizschraube des Spreizdübels befestigten Gegenstand. Sofern der befestigte Gegenstand die Spreizschraube an der Unterseite ihres Schraubenkopfs axial in Ausziehrichtung beaufschlagt, wirkt die reibungserhöhende Aufrauung einer Drehung der Spreizschraube und somit einem Ausdrehen aus der Dübelhülse entgegen.

Die Aufrauung kann bei einer Ausgestaltung der Erfindung als Rändel oder als Radialverrippung ausgeführt sein.

Zur Vermeidung einer Drehung der Dübelhülse in einem Bohrloch sieht eine Ausgestaltung der Erfindung tangential von der Dübelhülse abstehende Drehsicherungselemente vor.

Die Erfindung wird nachfolgend anhand eines in der Zeichnung dargestellten Ausführungsbeispiels näher erläutert. Es zeigen:
- Figur 1: eine Spreizschraube eines erfindungsgemäßen Spreizdübels in perspektivischer Darstellung;
- Figur 2: die Spreizschraube aus Figur 1 in Seitenansicht;
- Figur 3: einen Querschnitt der Spreizschraube aus Figuren 1 und 2 gemäß Linie III - III in Figur 2;
- Figur 4: eine Dübelhülse des erfindungsgemäßen Spreizdübels in perspektivischer Darstellung;
- Figur 5: einen Achsschnitt der Dübelhülse aus Figur 4; und
- Figur 6: eine Stirnansicht auf ein hinteres Ende der Dübelhülse aus Figuren 4 und 5 gemäß Pfeil VI in Figur 5.

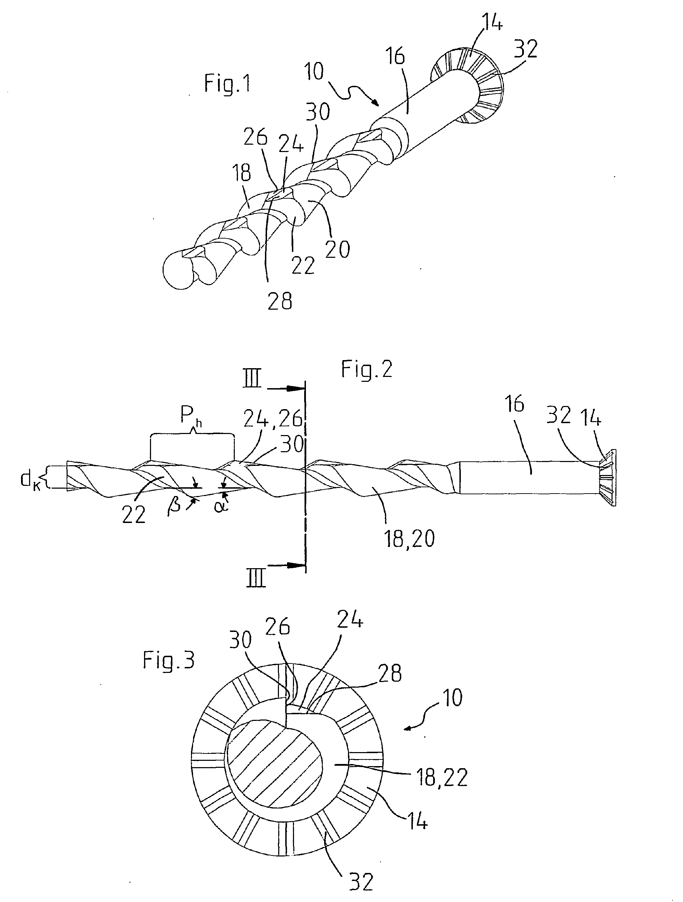

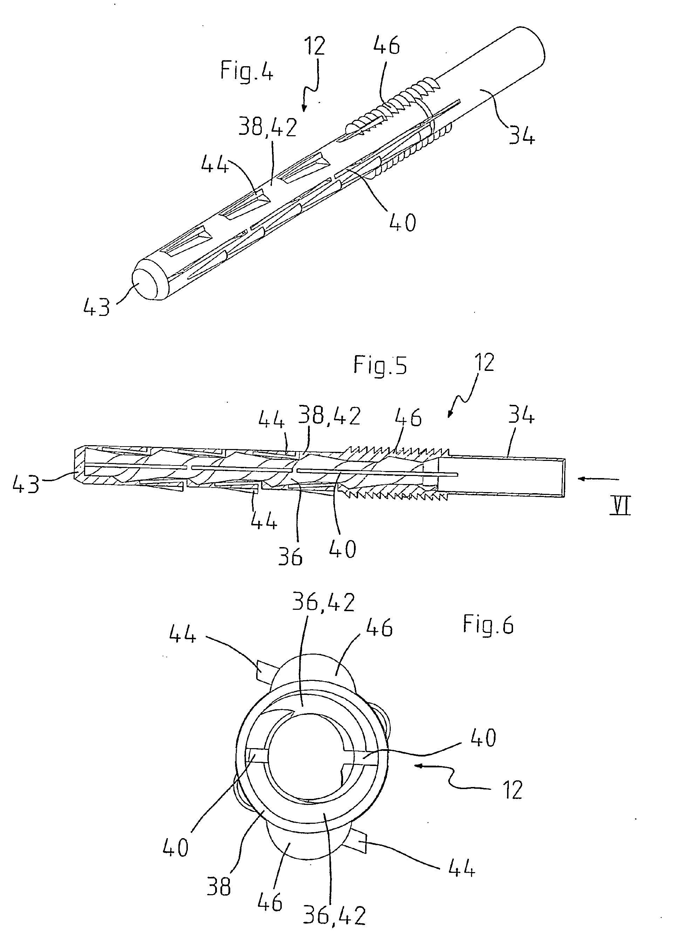

Der in der Zeichnung dargestellte, erfindungsgemäße Spreizdübel weist eine beispielsweise aus Stahl hergestellte, in Figuren 1 bis 3 dargestellte Spreizschraube 10 und eine in Figuren 4 bis 6 dargestellte, vorzugsweise aus Kunststoff bestehende Spreizhülse 12 auf. Die Spreizschraube 10 weist einen Schraubenkopf 14, einen gewindefreien Schraubenschaft 16 und ein Schraubengewinde 18 auf, die einstückig miteinander sind. Das Schraubengewinde 18 ist eingängig und weist eine große Gewindesteigung Pₕ auf, die im dargestellten und beschriebenen Ausführungsbeispiel etwa dem 4 ½ fachen eines Kerndurchmessers dₖ entspricht. Eine in Einschraubrichtung hintere Flanke 20 des Schraubengewindes 18 steht in einem flachen Winkel α von etwa 9° zu einer Achsrichtung der Spreizschraube 10. Dabei ist die in Einschraubrichtung hintere Flanke 20 eine dem Schraubenkopf 14 zugewandte Flanke 20 des Schraubengewindes 18.

Durch den flachen Winkel α der in Einschraubrichtung hinteren Flanke 20 des Schraubengewindes 18 weist die hinteren Flanke 20 eine kegelähnliche Gestaltung auf.

Eine in Einschraubrichtung vordere Flanke 22 des Schraubengewindes 18 ist wesentlich steiler ausgerichtet, sie steht im dargestellten und beschriebenen Ausführungsbeispiel der Erfindung unter einem Winkel β von etwa 30° zur Achsrichtung der Spreizschraube 10.

An einer Stelle des Umfangs ist eine im Querschnitt der Spreizschraube 10 rechteckige Ausfräsung 24 angebracht. Die Ausfräsung 24 weist eine Tiefe auf, die kleiner als eine Höhe des Schraubengewindes ist. Die Ausfräsung 24 reicht also nicht bis zum Kern des Schraubengewindes 18 nach innen. Die Ausfräsung 24 wiederholt sich jeweils einmal pro Steigung Pₕ.

Wie gut in dem in Figur 3 dargestellten Querschnitt der Spreizschraube 10 erkennbar, weist die Ausfräsung 24 eine radial ausgerichtete Flanke 26 und eine tangential ausgerichtete Flanke 28 auf. Die radial ausgerichtete Flanke 26 ist einer Ausdrehrichtung der Spreizschraube 10 zugewandt, bei einem Rechtsgewinde weist die radial ausgerichtete Flanke 26 in Richtung einer Linksdrehung. Die radiale Flanke 26 der Ausfräsung 24 wird nachfolgend als Ausdrehsicherungsflanke 26 bezeichnet. Die Ausfräsung 24 gibt dem in Figur 3 dargestellten Querschnitt des Schraubengewindes 18 der Spreizschraube 10 im Bereich der Ausdrehsicherungsflanke 26 ein sägezahnartiges Aussehen. Die Ausdrehsicherungsflanke 26 weist eine gemeinsame Kante 30 mit der in Einschraubrichtung der Spreizschraube 10 hinteren Flanke 20 des Schraubengewindes 18 auf.

An einer Unterseite weist der Schraubenkopf 14 einen Rändel 32 mit radialer Rändelung auf. Die Unterseite des Schraubenkopfes 14 ist die dem Schaft 16 und dem Schraubengewinde 18 zugewandte Stirnseite des Schraubenkopfs 14.

Die in Figuren 4 bis 6 dargestellte Dübelhülse 12 des erfindungsgemäßen Spreizdübels weist, wie insbesondere in Figur 5 zu sehen, einen gewindelosen Hohlschaftabschnitt 34 an ihrem hinteren oder Einführende auf, das zum Einbringen der Spreizschraube 10 offen ist. Der Hohlschaftabschnitt 34 weist in etwa dieselbe Länge wie der gewindefreie Schaft 16 der Spreizschraube 10 auf, bei in die Dübelhülse 12 eingebrachter Spreizschraube 10 befindet sich der gewindefreie Schaft 16 der Spreizschraube 10 im gewindelosen Hohlschaft Abschnitt 34 der Dübelhülse 12. Nach vorn schließt sich einstückig ein ein Innengewinde 36 aufweisender Hohlschaftabschnitt 38 an den gewindelosen Hohlschaftabschnitt 34 an. Das Innengewinde 36 ist komplementär zum Schraubengewinde 18 der Spreizschraube 10 geformt. In dem das Innengewinde 36 aufweisenden Hohlschaftabschnitt 38 weist die Dübelhülse 12 unterbrochene Längsschlitze 40 auf, die die Dübelhülse 12 in Spreizzungen 42 unterteilen. Der das Innengewinde 36 und die Längsschlitze 40 aufweisende Hohlschaftabschnitt 38 wird deswegen nachfolgend auch als Spreizbereich 38 bezeichnet. Im dargestellten Ausführungsbeispiel weist die Dübelhülse 12 zwei einander gegenüberliegend angeordnete Längsschlitze 40 auf, die die Dübelhülse 12 im Spreizbereich 38 in zwei Spreizzungen 42 unterteilt, die sich jeweils über etwa 180° in Umfangsrichtung erstrecken. Ein Vorderes- oder Einsteckende 43 der Dübelhülse 12 ist geschlossen ausgebildet.

Jede der beiden Spreizzungen 42 weist eine Anzahl in Längsrichtung der Dübelhülse 12 hintereinander angeordneter, in Draufsicht dreiecksförmiger Laschen 44 auf. Die Laschen 44 stehen in etwa tangential in einer Richtung ab, wie in der in Figur 6 dargestellten Stirnansicht der Dübelhülse 12 gut erkennbar. Die Laschen 44 bilden Drehsicherungselemente, die einem Drehen der Dübelhülse 12 in einem Bohrloch entgegenwirken.

Die Dübelhülse 12 weist eine Anzahl in Längsrichtung der Dübelhülse 12 hintereinander angeordneter, radial abstehender Widerhakenelemente 46 auf. Die Widerhakenelemente 46 sind in einem hinteren Abschnitt des Spreizbereichs 38 und einem vorderen Abschnitt des gewindelosen Hohlschaftabschnitts 34 angeordnet. Im Achsschnitt gemäß Figur 5 sind die Widerhakenelemente 46 sägezahnförmig, sie bilden ein Tannenbaumprofil und wirken einem Ausziehen der Dübelhülse 12 aus einem Bohrloch entgegen.

Funktion und Verwendung des erfindungsgemäßen, die Spreizschraube 10 und die Dübelhülse 12 umfassenden Spreizdübels sind folgende: Zum Gebrauch des Spreizdübels wird die Spreizschraube 10 durch Einschrauben in die Dübelhülse 12 eingebracht. Dabei wird die Spreizschraube nicht festgezogen um die Dübelhülse 12 nicht aufzuspreizen. Es ist auch möglich, die Spreizschraube 10 als Kern zum Spritzen der Dübelhülse 12 zu benutzen. In diesem Fall liegt die Spreizschraube 10 nach Herstellung der Dübelhülse 12 bereits in der Dübelhülse 12 ein. Mit der in die Dübelhülse 12 eingebrachten Spreizschraube 10 ist der Spreizdübel gebrauchsfertig, es ist der Auslieferungszustand des Spreizdübels. Zur Verankerung in einem Bohrloch in beispielsweise einem nicht dargestellten Mauerwerk wird der Spreizdübel, also die Dübelhülse 12 mit der einliegenden Spreizschraube 10 beispielsweise mit Hilfe eines Hammers oder eines elektrischen Schlagwerkzeugs durch ein Durchgangsloch in einem an dem Mauerwerk zu befestigenden, nicht dargestellten Gegenstand in das Bohrloch im Mauerwerk eingetrieben. Der Spreizdübel wird so tief in das Bohrloch eingetrieben, bis der Schraubenkopf 14 mit seiner Unterseite auf dem zu befestigenden Gegenstand aufsitzt. Beim Eintreiben des Spreizdübels wirkt die in Einschraubrichtung vordere Flanke 22 des Gewindes 18 der Spreizschraube 10 als Wiederlager oder Mitnehmer, die eine Eintreibkraft durch Formschluss auf die Dübelhülse 12 überträgt und dadurch die Dübelhülse 12 in das Bohrloch eintreibt. Die Verankerung des Spreizdübels im Bohrloch ist mit dem Eintreiben abgeschlossen, ein Anziehen durch Drehen der Spreizschraube 10 ist nicht notwendig. Allerdings kann die Spreizschraube 10 nach dem Eintreiben angezogen werden um ein Aufspreizen und Vorspannen des Spreizdübels 10, 12 zu erreichen. Zum Anziehen reicht ein Bruchteil einer Umdrehung der Spreizschraube 10 aus.

Wird die Spreizschraube 10 axial in einer Ausziehrichtung belastet, wirkt die in einem flachen Winkel α zur Achsrichtung ausgerichtete, in Einschraubrichtung hintere Flanke 20 nach Art einer Kegelfläche, sie drückt die Spreizzungen 42 der Dübelhülse 12 auseinander. Die Dübelhülse 12 wird auf gespreizt und der Spreizdübel 10, 12 im Bohrloch verankert. Das Schraubengewinde 18 der Spreizschraube 10 kann mit seiner in einem flachen Winkel α zur Achsrichtung ausgerichteten hinteren Flanke 20 hinsichtlich seiner Spreizwirkung wie eine Anzahl axial hintereinander angeordneter Spreizkegel angesehen werden, die durch axiale Beanspruchung der Spreizschraube 10 in Ausziehrichtung die Dübelhülse 12 im Spreizbereich 38 aufspreizen. Bei einer Bohrlocherweiterung beispielsweise infolge einer Rissbildung im Mauerwerk spreizt die Spreizschraube 10 bei axialer Beanspruchung in Ausziehrichtung die Dübelhülse 12 weiter auf, so dass der Spreizdübel 10, 12 bei einer Bohrlocherweiterung mit nahezu unveränderter Verankerungskraft im Bohrloch verankert bleibt. Der Spreizdübel 10, 12 weist ein Nachspreizverhalten auf, er ist zugzonentauglich. Die große Gewindesteigung Pₕ der Spreizschraube 10 stellt einen entsprechend großen Weg der Spreizschraube 10 in Bezug auf die Dübelhülse 12 in Ausziehrichtung zum Auf- und Nachspreizen zur Verfügung. Die große Gewindesteigung Pₕ vermeidet, dass die Spreizschraube 10 um eine Gewindesteigung Pₕ aus der Dübelhülse 12 herausgezogen wird, wodurch die Dübelhülse 12 mit ihrem Innengewinde 36 um einen Gang versetzt in das Schraubengewinde 18 "einschnappen" würde und die Aufspreizung aufgehoben wäre.

Aufgrund der großen Gewindesteigung Pₕ h kann eine Selbsthemmung der Spreizschraube 10 in der Dübelhülse 12 nicht in jedem Fall ausgeschlossen werden. Selbsthemmungsfreiheit bedeutet, dass eine axiale Beaufschlagung der Spreizschraube in Ausziehrichtung eine Drehung der Spreizschraube 10 in Ausdrehrichtung bewirkt und die Spreizschraube 10 durch die axiale Beanspruchung aus der Dübelhülse ausgedreht wird. Um dies zu vermeiden, sind die oben beschriebenen Ausdrehsicherungsflanken 26 an den Gewindegängen des Schraubengewindes 18 vorgesehen. Die Ausdrehsicherungsflanken 26 drücken sich mit ihren Kanten 30 beim Aufspreizen der Dübelhülse 12 in die Dübelhülse 12 ein. Dazu ist es nicht notwendig, dass die Ausdrehsicherungsflanken 26 radial über die Flanken 20, 22 des Schraubengewindes 18 vorstehen. Die in die Dübelhülse 12 eingedrückten Ausdrehsicherungsflanken 26 bilden Wiederlager, die einem Ausdrehen der Spreizschraube durch axiale Beaufschlagung der Spreizschraube 10 in Ausziehrichtung bei Selbsthemmungsfreiheit des Schraubengewindes 18 und des Innengewindes 36 der Dübelhülse 12 entgegenwirken. Die Ausdrehsicherungsflanken 26 bilden somit eine Ausdrehsicherungseinrichtung des Spreizdübels 10, 12.

Ist der Spreizdübel 10, 12 nicht aufgespreizt und befindet sich insbesondere nicht in einem Bohrloch, drücken sich die Kanten 30 der Ausdrehsicherungsflanken 26 nicht in die Dübelhülse ein, so dass die Spreizschraube 10 aus der Dübelhülse 12 ausgedreht werden kann.

Eine weitere Ausdrehsicherungseinrichtung bildet der Rändel 32 an der Unterseite des Schraubenkopfes 14. Wird die Spreizschraube 10 von einem mit ihr an einer Wand befestigten Gegenstand axial in Ausziehrichtung beaufschlagt, liegt der Gegenstand an der den Rändel 32 aufweisenden Unterseite des Schraubenkopfs 14 an. Sofern der Gegenstand nicht dreht, wirkt eine durch den Rändel 32 erhöhte Reibung zwischen dem Schraubenkopf 14 und dem Gegenstand einem Drehen der Spreizschraube 10, insbesondere also einem Ausdrehen der Spreizschraube 10 aus der Dübelhülse 12 bei Selbsthemmungsfreiheit des Schraubengewindes 18 entgegen.

Die in einem flachen Winkel α zur Achsrichtung der Spreizschraube ausgerichtete hintere Flanke 20 des Schraubengewindes 18, die nach Art axial hintereinander angeordneter Spreizkegel wirkt, spreizt die Dübelhülse gleichmäßig über die gesamte Länge ihres Spreizbereichs 38 auf. Dadurch eignet sich der erfindungsgemäße Spreizdübel 10, 12 außer für Vollbaustoffe auch für Hohlbaustoffe wie beispielsweise Lochziegel, da durch die gleichmäßige Aufspreizung über die gesamte Länge des Spreizbereichs 38 eine Aufspreizung im Bereich mindestens eines Stegs des Lochziegels stattfindet, die den Spreizdübel 10, 12 im Lochziegel verankert.

## Patentansprüche

1. Spreizdübel (10, 12) mit einer aufspreizbaren Dübelhülse (12) und einer Spreizschraube (10) mit Schraubenkopf (14) zum Aufspreizen der Dübelhülse, wobei die Spreizschraube (10) ein Schraubengewinde (18) aufweist, dessen in Einschraubrichtung hintere Flanke (20) einen flachen Winkel (α) von etwa 45° oder weniger zu einer Achsrichtung der Spreizschraube (10) aufweist, **dadurch gekennzeichnet, dass** die Dübelhülse ein zur Spreizschraube komplementäres Innengewinde aufweist.

2. Spreizdübel nach Anspruch 1, **dadurch gekennzeichnet, dass** die in Einschraubrichtung hintere Flanke (20) des Schraubengewindes (18) der Spreizschraube in einem Winkel (α) von etwa 9° zur Achsrichtung der Spreizschraube (10) verläuft.

3. Spreizdübel nach Anspruch 1, **dadurch gekennzeichnet, dass** das Schraubengewinde (18) eine große Gewindesteigung (Pₕ) aufweist, die in etwa einem Kerndurchmesser (dₖ) des Schraubengewindes (18) entspricht oder größer ist.

4. Spreizdübel nach Anspruch 3, **dadurch gekennzeichnet, dass** die Gewindesteigung (Pₕ) des Schraubengewindes (18) der Spreizschraube (10) mehr als doppelt so groß wie der Kerndurchmesser (dₖ) des Schraubengewindes (18) ist.

5. Spreizschraube nach Anspruch 4, **dadurch gekennzeichnet, dass** die Gewindesteigung (Pₕ) des Schraubengewindes (18) der Spreizschraube (10) etwa das Viereinhalbfache des Kemdurchmessers (dₖ) des Schraubengewindes (18) beträgt.

6. Spreizdübel nach Anspruch 1, **dadurch gekennzeichnet, dass** der Spreizdübel (10, 12) eine Ausdrehsicherungseinrichtung (26; 32) aufweist, die einem Ausdrehen der Spreizschraube (10) aus der Dübelhülse (12) entgegenwirkt.

7. Spreizdübel nach Anspruch 6, **dadurch gekennzeichnet, dass** ein Gewindegang des Schraubengewindes (18) an zumindest einer Stelle eine Ausdrehsicherungsflanke (26) aufweist, die in etwa in einer Längsrichtung der Spreizschraube (10) verläuft und die etwa radial zur Spreizschraube (10) ausgerichtet ist und die einer Ausdrehrichtung der Spreizschraube (10) zugewandt ist.

8. Spreizdübel nach Anspruch 7, **dadurch gekennzeichnet, dass** die Ausdrehsicherungsflanke (26) eine gemeinsame Kante (30) mit einer Flanke (20, 22) des Schraubengewindes (18) aufweist.

9. Spreizdübel nach Anspruch 6, **dadurch gekennzeichnet, dass** die Spreizschraube (10) einen Schraubenkopf (14) aufweist, dessen Unterseite eine Aufrauung (32) aufweist.

10. Spreizdübel nach Anspruch 9, **dadurch gekennzeichnet, dass** der Schraubenkopf (14) einen Rändel (32) als Aufrauung an seiner Unterseite aufweist.

11. Spreizdübel nach Anspruch 9, **dadurch gekennzeichnet, dass** der Schraubenkopf (14) eine Radialverrippung als Aufrauung an seiner Unterseite aufweist.

12. Spreizdübel nach Anspruch 1, **dadurch gekennzeichnet, dass** die Dübelhülse (12) in etwa in tangentialer Richtung abstehende Drehsicherungselemente (44) aufweist.

13. Spreizdübel nach Anspruch 1, **dadurch gekennzeichnet, dass** die Spreizschraube (10) vormontiert in der Dübelhülse (12) einliegt.

## Claims

1. Expansible fixing plug (10, 12) having an expansible fixing plug sleeve (12) and an expander screw (10) with a screw head (14) for expanding the fixing plug sleeve, the expander screw (10) having a screw thread (18), the rear (in the direction of screwing-in) flank (20) of which is at a shallow angle (α) of about 45° or less relative to the axial direction of the expander screw (10), **characterized in that** the fixing plug sleeve has an internal thread that is complementary to the expander screw.

2. Expansible fixing plug according to claim 1, **characterized in that** the rear (in the direction of screwing-in) flank (20) of the screw thread (18) of the expander screw extends at an angle (α) of about 9° to the axial direction of the expander screw (10).

3. Expansible fixing plug according to claim 1, **characterized in that** the screw thread (18) has a large thread pitch (Pₕ) which corresponds to, or is greater than, approximately one core diameter (dₖ) of the screw thread (18).

4. Expansible fixing plug according to claim 3, **characterized in that** the thread pitch (Pₕ) of the screw thread (18) of the expander screw (10) is more than twice as large as the core diameter (dₖ) of the screw thread (18).

5. Expander screw according to claim 4, **characterized in that** the thread pitch (Pₕ) of the screw thread (18) of the expander screw (10) is approximately four and a half times the core diameter (dₖ) of the screw thread (18).

6. Expansible fixing plug according to claim 1, **characterized in that** the expansible fixing plug (10, 12) has an anti-unscrewing device (26; 32) which counteracts unscrewing of the expander screw (10) from the fixing plug sleeve (12).

7. Expansible fixing plug according to claim 6, **characterized in that** a thread turn of the screw thread (18) has, at at least one point, an anti-unscrewing flank (26) which extends approximately in the longitudinal direction of the expander screw (10) and which is aligned approximately radially relative to the expander screw (10) and which faces the unscrewing direction of the expander screw (10).

8. Expansible fixing plug according to claim 7, **characterized in that** the anti-unscrewing flank (26) has an edge (30) in common with a flank (20, 22) of the screw thread (18).

9. Expansible fixing plug according to claim 6, **characterized in that** the expander screw (10) has a screw head (14), the underside of which has a roughened surface (32).

10. Expansible fixing plug according to claim 9, **characterized in that** the screw head (14) has a knurl (32) as the roughened surface on its underside.

11. Expansible fixing plug according to claim 9, **characterized in that** the screw head (14) has radial ribbing as the roughened surface on its underside.

12. Expansible fixing plug according to claim 1, **characterized in that** the fixing plug sleeve (12) has anti-rotation elements (44) projecting approximately tangentially.

13. Expansible fixing plug according to claim 1, **characterized in that** the expander screw (10) is pre-mounted in the fixing plug sleeve (12).

## Revendications

1. Cheville à expansion (10, 12) avec une douille de cheville expansible (12) et une vis de réglage (10) avec tête de vis (14) pour l'expansion de la douille de cheville, sachant que la vis de réglage (10) comporte un filetage de vis (18) dont le flanc arrière (20) comporte dans le sens du vissage un angle plat (α) d'environ 45° ou moins par rapport à un sens de l'axe de la vis de réglage (10), **caractérisée en ce que** la cheville à expansion comporte un filetage intérieur complémentaire pour la vis de réglage.

2. Cheville à expansion selon la revendication 1, **caractérisée en ce que** le flanc arrière dans le sens de vissage (20) du filetage de vis (18) de la vis de réglage passe dans un angle (α) d'environ 9° par rapport à un sens de l'axe de la vis de réglage (10).

3. Cheville à expansion selon la revendication 1, **caractérisée en ce que** le filetage de vis (18) comporte un grand pas de vis (Pₕ) qui correspond à peu près ou est plus grand qu'un diamètre de noyau (dₖ) du filetage de vis (18).

4. Cheville à expansion selon la revendication 3, **caractérisée en ce que** le pas de vis (Pₕ) du filetage de vis (18) de la vis de réglage (10) est deux fois plus grand que le diamètre de noyau (dₖ) du filetage de vis (18).

5. Cheville à expansion selon la revendication 4,
**caractérisée en ce que** le pas de vis (Pₕ) du filetage de vis (18) de la vis de réglage (10) est à peu près quatre fois et demi plus grand que le diamètre de noyau (dₖ) du filetage de vis (18).

6. Cheville à expansion selon la revendication 1, **caractérisée en ce que** la cheville à expansion (10, 12) comporte un dispositif de sûreté d'alésage (26, 32) qui contrarie un alésage de la vis de réglage (10) à partir de la douille de cheville (12)

7. Cheville à expansion selon la revendication 6, **caractérisée en ce qu'**un pas de vis du filetage de vis (18) comporte au moins à un endroit un flanc de sécurité d'alésage (26) qui passe à peu près dans un sens longitudinal de la vis de réglage (10) et qui est aligné à peu près radialement par rapport à la vis de réglage (10) et qui est tourné dans un sens d'alésage de la vis de réglage (10).

8. Cheville à expansion selon la revendication 7, **caractérisée en ce que** le flanc de sécurité d'alésage (26) comporte un bord commun (30) avec un flanc (20, 22) du filetage de vis (18).

9. Cheville à expansion selon la revendication 6, **caractérisée en ce que** la vis de réglage (10) comporte une tête de vis (14) dont le côté inférieur comporte un mordançage (32).

10. Cheville à expansion selon la revendication 9, **caractérisée en ce que** la tête de vis (14) comporte un bord moleté (32) comme mordançage sur son côté inférieur.

11. Cheville à expansion selon la revendication 9, **caractérisée en ce que** la tête de vis (14) comporte un nervurage radial comme mordançage sur son côté inférieur.

12. Cheville à expansion selon la revendication 1, **caractérisée en ce que** la douille de cheville (12) comporte des éléments de sécurité de torsion (44) disparaissant à peu près dans un sens tangentiel.

13. Cheville à expansion selon la revendication 1, **caractérisée en ce que** la vis de réglage (10) est pré-montée dans la douille de cheville (12).
